(19)

Europäisches
Patentamt
European
Patent Office
Office européen
des brevets

(11) **EP 3 160 062 A1**

(12) **EUROPEAN PATENT APPLICATION**
published in accordance with Art. 153(4) EPC

(43) Date of publication:
**26.04.2017 Bulletin 2017/17**

(21) Application number: **14895391.2**

(22) Date of filing: **25.11.2014**

(51) Int Cl.:
***H04B 10/60*** (2013.01)

(86) International application number:
**PCT/CN2014/092186**

(87) International publication number:
**WO 2015/192601 (23.12.2015 Gazette 2015/51)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **19.06.2014 CN 201410276449**

(71) Applicant: **ZTE Corporation
Guangdong 518057 (CN)**

(72) Inventors:
• **SU, Jie
Shenzhen
Guangdong 518057 (CN)**

• **CHI, Nan
Shenzhen
Guangdong 518057 (CN)**
• **HUANG, Xingang
Shenzhen
Guangdong 518057 (CN)**
• **CHEN, Biduo
Shenzhen
Guangdong 518057 (CN)**
• **LI, Mingsheng
Shenzhen
Guangdong 518057 (CN)**

(74) Representative: **Potter Clarkson LLP
The Belgrave Centre
Talbot Street
Nottingham NG1 5GG (GB)**

(54) **DEVICE AND SYSTEM FOR OPTICAL SIGNAL DETECTION AND DEMODULATION**

(57) Disclosed in the present invention are a device and system for optical signal detection and demodulation. The device includes a tunable optical filter, a polarization beam splitter, a first optoelectronic detector, a second optoelectronic detector, a maximal-ratio combining module and a demodulation module. The tunable optical filter is configured to filter signals of one channel among multiple WDM-PON channels, and obtain received optical signals of the channel. The polarization beam splitter is configured to perform polarization diversity on the received optical signals, and split the received optical signals of the single-channel into X polarized optical signals and Y polarized optical signals. The first optoelectronic detector is configured to convert the X polarized optical signals to first electrical signals. The second optoelectronic detector is configured to convert the Y polarized optical signals to second electrical signals. The maximal-ratio combining module is configured to distribute weights for the first electrical signals and the second electrical signals, and obtain weighted combined output signals of the received optical signals. The demodulation module is configured to demodulate the weighted combined output signals in accordance with the modulation format used by the transmitting end of the system, and output the demodulated received signals.

Fig. 1

**Description**

**TECHNICAL FIELD**

The present disclosure relates to the field of communication, and more particularly, to a device and system for detecting and demodulating optical signal.

**BACKGROUND**

At present, the main techniques in diversity technology include space, frequency, time and polarization diversity. In the combining technology, however, the present main technical schemes include: 1) the maximal ratio combining scheme; 2) equal gain combining scheme; 3) selection combining scheme; and 4) switching combining scheme. The above four schemes can obtain a plurality of independent branch signals at a receiving side of a system based on the diversity technique and obtain a diversity gain by a corresponding combining algorithm to realize an improvement of the bit error rate performance of the received signal from a single channel. However, the maximal ratio combining scheme can only process the received signal linearly at the receiving side, thus it has remarkable features such as simple algorithm process and facile realization. Moreover, the signal recovery technology for the ONU (Optical Network Unit) side of ultra-dense WDM-PON (Wavelength Division Multiplexing-Passive Optical Network) is usually realized by direct detection or coherent detection technology. However, the direct detection has a disadvantage of the poor bit error rate performance for the received signal, and the coherent detection has disadvantages of high cost and the complexity of system structure, thus both of them have some limitations in practice.
In the related art, as for the problem of how to introduce the polarization diversity and combining technology into the ultra-dense WDM-PON system and improve the bit error rate performance for the signal received through direct detection with a simple system structure and low cost, no effective solution has been put forward at present.

**SUMMARY**

As for the problem of how to introduce the polarization diversity and combining technology into the ultra-dense WDM-PON system and improve the bit error rate performance for the signal received through direct detection with a simple system structure and low cost, the present disclosure provides a device and system for detecting and demodulating optical signal for solving at least the above problems.
According to an embodiment of the present disclosure, a device for detecting and demodulating optical signal is provided, which includes a tunable optical filter, a polarization beam splitter, a first optoelectronic detector, a second optoelectronic detector, a maximal ratio combining module and a demodulation module, wherein the tunable optical filter is configured to filter a signal of a channel among multiple channels of wavelength division multiplexing-passive optical network (WDM-PON) to obtain a received optical signal of the channel; the polarization beam splitter is configured to perform polarization diversity on the received optical signal, split the received optical signal of the single channel into X polarized optical signal and Y polarized optical signal, and input the X polarized optical signal and the Y polarized optical signal into the first optoelectronic detector and the second optoelectronic detector, respectively; the first optoelectronic detector is configured to convert the input optical signal into a first electrical signal; the second optoelectronic detector is configured to convert the input optical signal into a second electrical signal; the maximal ratio combining module is configured to assign weights for the first electrical signals and the second electrical signals to obtain a weighted combined output signal of the received optical signal; and the demodulation module is configured to demodulate the weighted combined output signal in accordance with a modulation format used by a transmitting side of a system to output the demodulated received signal.
Optionally, the polarization beam splitter performs polarization diversity on the received optical signal by splitting the received optical signal into two mutually independent duplicates through polarization diversity technique, wherein one duplicate is the X polarized optical signal and the other is the Y polarized optical signal.
Optionally, the maximal ratio combining module includes: an estimation module configured to perform channel estimation on the first electrical signal and the second electrical signal, respectively, to obtain a signal-to-noise ratio of the first electrical signal and a signal-to-noise ratio of the second electrical signal; a determination module configured to determine a weight assigned to the first electrical signal and a weight assigned to the second electrical signal in accordance with the signal-to-noise ratio of the first electrical signal and the signal-to-noise ratio of the second electrical signal, wherein, the higher the signal-to-noise ratio, the greater the weight assigned; and a summing module configured to perform weighted summing on the first electrical signal and the second electrical signal in accordance with the weight of the first electrical signal and the weight of the second electrical signal to obtain the weighted combined output signal.
According to another embodiment of the present disclosure, an apparatus for receiving optical signal is provided, which includes the device for detecting and demodulating optical signal described as above.

According to yet another embodiment of the present disclosure, an ultra-dense WDM-PON system is provided, which includes the apparatus for receiving optical signal described as above, and an apparatus for transmitting optical signal connected with the apparatus for receiving optical signal through an optical fiber.

Optionally, the apparatus for transmitting optical signal includes an orthogonal multi-carrier light source and a module for transmitting an ultra-dense polarization division multiplexed-quadrature phase shift keying (PDM-QPSK) optical signal connected with the orthogonal multi-carrier light source.

Optionally, the orthogonal multi-carrier light source includes an external cavity laser, a radio frequency signal source, a direct current (DC) signal source, two cascaded phase modulators and an intensity modulator; wherein the external cavity laser is configured to provide an optical carrier signal for a first phase modulator of the two cascaded phase modulators; the radio frequency signal source is configured to drive the two cascaded phase modulators and the intensity modulator, and generate a multi-carrier optical signal being flat and having a frequency interval in consistent with a frequency interval of a radio frequency signal; the cascaded phase modulators are configured to generate a multi-carrier optical signal under the drive of the radio frequency signal source; the intensity modulator is configured to flatten the multi-carrier optical signal generated by the phase modulator; and the DC signal source is configured to provide a DC offset for the intensity modulator.

Optionally, the intensity modulator is configured to flatten the multi-carrier optical signal generated by the phase modulator by adjusting the DC offset and a radio frequency modulation factor of the intensity modulator.

Optionally, the module for transmitting the ultra-dense PDM-QPSK optical signal includes an interleaver, a first polarization controller, a second polarization controller, a first electrical dual channel waveform generator, a second electrical dual channel waveform generator, a first in-phase quadrature (IQ) modulator, a second IQ modulator, a first polarization multiplexer, a second polarization multiplexer and a wavelength selection switch, wherein the interleaver is configured to divide the multi-carrier optical signal outputted by the orthogonal multi-carrier light source into an odd-numbered optical signal and an even-numbered optical signal, input the odd-numbered optical signal into the first polarization controller, and input the even-numbered optical signal into the second polarization controller; the first polarization controller is configured to perform polarization control on the input odd-numbered optical signal and output the polarized odd-numbered optical signal to the first IQ modulator; the second polarization controller is configured to perform polarization control on the input even-numbered optical signal and output the polarized even-numbered optical signal to the second IQ modulator; the first IQ modulator is configured to modulate the input polarized odd-numbered optical signal using an external modulation to generate a first QPSK signal; the second IQ modulator is configured to modulate the input polarized even-numbered optical signal using an external modulation to generate a second QPSK signal; the first electrical dual channel waveform generator is configured to generate an electrical signal for driving the first IQ modulator; the second electrical dual channel waveform generator is configured to generate an electrical signal for driving the second IQ modulator; the first polarization multiplexer is configured to process the first QPSK signal to generate a first PDM-QPSK signal; the second polarization multiplexer is configured to process the second QPSK signal to generate a second PDM-QPSK signal; and the wavelength selection switch is configured to optically filter the first PDM-QPSK signal and the second PDM-QPSK signal, respectively, to generate an ultra-dense PDM-QPSK optical signal which is spectrally formed by orthogonal binary.

The present disclosure improves the bit error rate performance of the signal received from single channel through the polarization diversity technique and the maximal ratio combining algorithm, and overcomes the shortcomings of the complex structure of the system which uses the common space, frequency and time diversity technology, thereby simplifying the structure of the ONU side of the system and achieving cost control.

## BRIEF DESCRIPTION OF THE DRAWINGS

The accompanying drawings, which are included to provide a further understanding of the present disclosure and constitute a part of this application, illustrate exemplary embodiment(s) of the present disclosure and together with the description serve to explain the present disclosure. In the drawings:

Fig. 1 is a block diagram illustrating a ultra-dense WDM-PON system according to an embodiment of the present disclosure;

Fig. 2 is a block diagram illustrating a device for detecting and demodulating optical signal according to an embodiment of the present disclosure;

Fig. 3 is a block diagram illustrating an apparatus for transmitting optical signal according to an embodiment of the present disclosure;

Fig. 4 is a block diagram illustrating an orthogonal multi-carrier light source according to an embodiment of the present disclosure; and

Fig. 5 is a block diagram illustrating a module for transmitting ultra-dense PDM-QPSK optical signal according to an embodiment of the present disclosure.

**DETAILED DESCRIPTION**

Hereinafter, the present disclosure will be described in detail with reference to the accompanying drawings and embodiments. It should be noted that, in the case of no conflict, the features of the embodiments and the embodiments of the present application may be combined with each other.

The purpose of the embodiment of the present disclosure is to provide a device (or module) for detecting and demodulating signal based on polarization diversity and maximal ratio combining (MRC) algorithm on the ONU side of an ultra-dense WDM-PON system. The bit error rate performance of the signal received by the system is improved by the maximal ratio combining algorithm under the premise of maintaining the system structure as simple as possible and low cost.

According to an embodiment of the present disclosure, an ultra-dense WDM-PON system is provided.

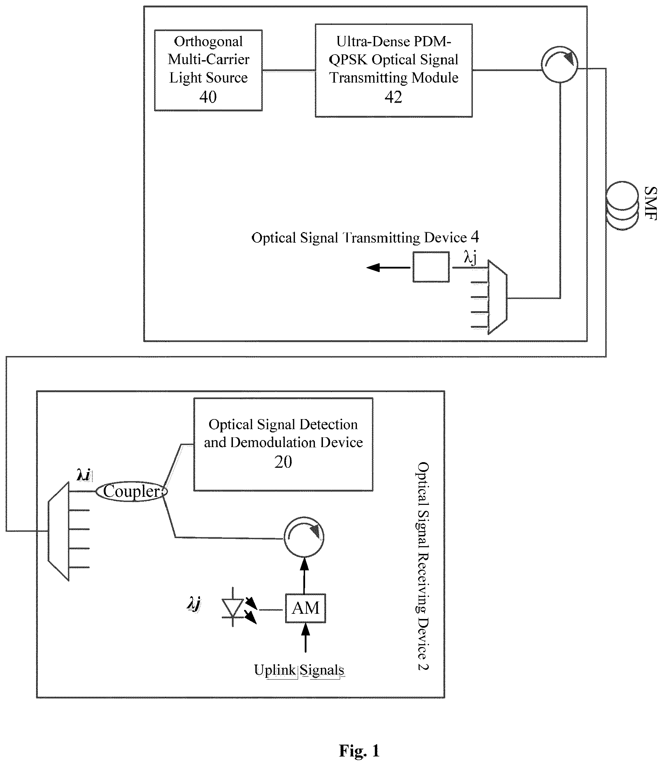

Fig. 1 is a block diagram illustrating a WDM-PON system according to an embodiment of the present disclosure. As shown in Fig. 1, the system includes an apparatus 2 for receiving optical signal and an apparatus 4 for transmitting optical signal, wherein the apparatus 2 for receiving optical signal and the apparatus 4 for transmitting optical signal are connected via an optical fiber 6.

Herein, the apparatus 2 for receiving optical signal may be an optical line terminal (OLT), and the apparatus 4 for transmitting optical signal may be an optical network unit (ONU).

In an embodiment of the present disclosure, as shown in Fig. 1, the apparatus 2 for receiving optical signal includes a device 20 for detecting and demodulating optical signal (which may also be referred to as a module for controlling and demodulating optical signal) which is configured to detect and demodulate the received optical signal. The apparatus 4 for transmitting optical signal includes an orthogonal multi-carrier light source 40 and a module 42 for transmitting ultra-dense PDM-QPSK optical signal. Each module will be described below.

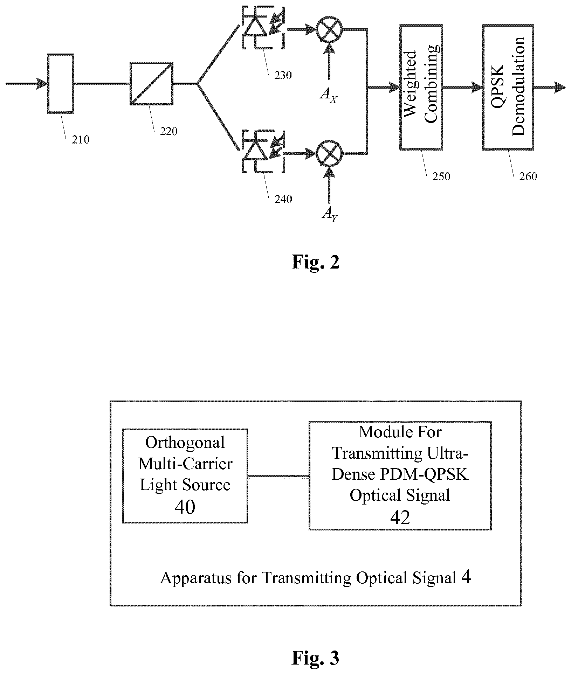

Fig. 2 is a block diagram illustrating a device for detecting and demodulating optical signal according to an embodiment of the present disclosure. In an embodiment of the present disclosure, as shown in Fig. 2, the device 20 for detecting and demodulating optical signal may include a tunable optical filter (TOF) 210, a polarization beam splitter (PBS) 220, a first optoelectronic detector (PD) 230, a second optoelectronic detector (PD) 240, a maximal ratio combining module 250 and a demodulation module 260.

In an embodiment, the tunable optical filter 210 is configured to filter a signal of a certain channel among multiple channels of the WDM-PON (i.e. an optical signal sent from the apparatus 4 for transmitting optical signal) to obtain a received optical signal of the channel. The polarization beam splitter 220 is configured to perform polarization diversity on the received optical signal to split the signal of the single channel into X polarized signal and Y polarized signal, wherein the signals in both directions are input into the first optoelectronic detector (PD) 230 and the second optoelectronic detector (PD) 240, respectively. The first optoelectronic detector (PD) 230 and the second optoelectronic detector (PD) 240 are configured to convert the input optical signals into electrical signals. The maximal ratio combining module 250 is configured to assign weights for two electrical signals output by the first optoelectronic detector (PD) 230 and the second optoelectronic detector 240, to obtain and output a weighted combination of the received optical signals. The demodulation module 260 is configured to demodulate the weighted combined output signal in accordance with a modulation format predefined by a transmitting side (i.e. apparatus 4 for transmitting optical signal) of the system to output the demodulated received signal.

Optionally, in an embodiment of the present disclosure, the polarization beam splitter 220 may split the received same optical signal transmitted from the apparatus for transmitting optical signal into two mutually independent duplicates through polarization diversity technique, and each duplicate corresponds to the polarized optical signal in one polarization direction. By this optional implementation, polarized optical signals in both directions (i.e., the X polarized optical signal and the Y polarized optical signal) are obtained by duplicates, which has the advantage of simple system structure compared with the common diversity technique such as spatial diversity, time diversity, or the like.

Optionally, the maximal ratio combining module 250 may include: an estimation module configured to perform channel estimation on both electrical signals output by the first optoelectronic detector (PD) 230 and the second optoelectronic detector 240, respectively, to obtain signal-to-noise ratios of two electrical signals; a determination module configured to determine a weight assigned to each electrical signal in accordance with the signal-to-noise ratio of each electrical signal, wherein, the higher the signal-to-noise ratio, the greater the weight assigned; and a summing module configured to perform weighted summing on two electrical signals in accordance with the weight of each electrical signal to obtain the weighted combined output signal. In this optional implementation, the maximal ratio combining module 250 first performs channel estimation on the received two independent duplicates, respectively, and determines the weight assigned to the duplicate in accordance with the signal-to-noise ratio of received signal, wherein the higher signal-to-noise ratio, the greater the weight assigned. The channel estimation for determining the signal-to-noise ratio of the received signal may be achieved by using on-off keying (OOK) at the transmitting side, sending a training sequence and calculating the ratio of the effective signal to the noise at the receiving side. Next, a weighted summing is performed on the two independent duplicates according to the weights, which are merged into one output signal to obtain a diversity gain, such that the bit error rate performance of the received signal is further improved on the basis of single reception. The maximal ratio combining module 250 in this optional implementation is applicable to any modulation, and arbitrary branch fading distribution.

Fig. 3 is a block diagram illustrating an apparatus for transmitting optical signal according to an embodiment of the present disclosure. As shown in Fig. 3, the apparatus mainly includes an orthogonal multi-carrier light source 40 and a module 42 for transmitting ultra-dense PDM-QPSK optical signal. In an embodiment, the orthogonal multi-carrier light source 40 is configured to generate a flat multi-carrier, and the module 42 for transmitting ultra-dense PDM-QPSK optical signal is configured to process the multi-carrier input by the orthogonal multi-carrier light source 40, and generate and transmit an ultra-dense PDM-QPSK optical signal.

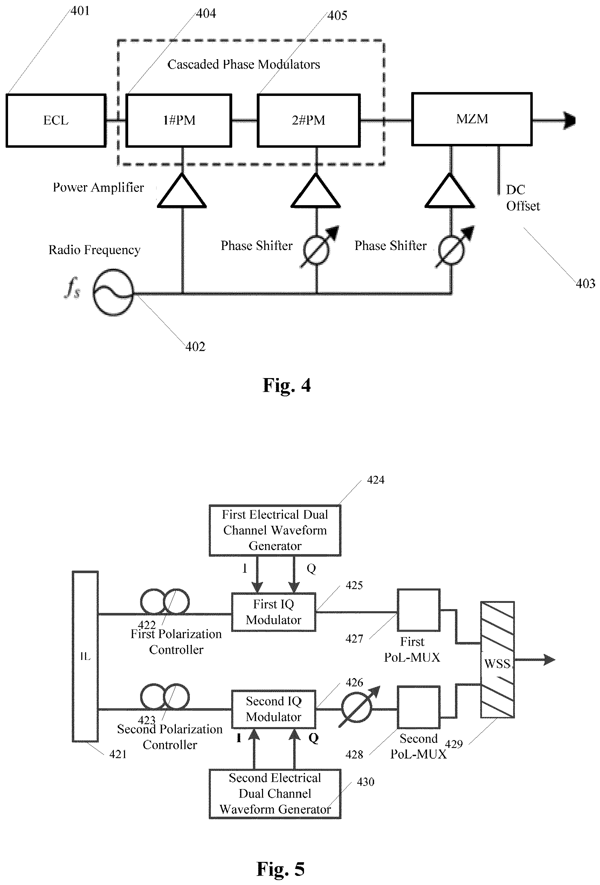

Fig. 4 is a block diagram illustrating an orthogonal multi-carrier light source according to an embodiment of the present disclosure. As shown in Fig. 4, the orthogonal multi-carrier light source 40 includes an external cavity laser (ECL) 401, a radio frequency signal source 402, a direct current (DC) signal source 403, two cascaded phase modulators (PM) 404 and an intensity modulator 405.

In an embodiment, the external cavity laser (ECL) 401 is configured to provide an optical carrier signal for a first phase modulator of the two cascaded phase modulators. The radio frequency signal source 402 is configured to drive the two cascaded phase modulators 404 and the intensity modulator 405, and generate a multi-carrier optical signal being flat and having a frequency interval which coincides with a frequency interval of a radio frequency signal. The two cascaded phase modulators 404 are configured to generate a multi-carrier optical signal under the drive of the radio frequency signal source. The intensity modulator 405 is configured to flatten the multi-carrier optical signal generated by the phase modulator. The DC signal source 403 is configured to provide a DC offset for the intensity modulator 405.

Optionally, the intensity modulator 405 is configured to flatten the multi-carrier optical signal generated by the phase modulators 404 by adjusting the DC offset and a radio frequency modulation factor of the intensity modulator.

In an alternative implementation of an embodiment of the present disclosure, the radio frequency signal source 402 simultaneously drive the two cascaded phase modulators 404 and the intensity modulator 405, and generate a multi-carrier optical signal being flat and having a frequency interval which coincides with a frequency interval of a radio frequency signal. The two cascaded phase modulators 404 are mainly used for generating the multi-carrier optical signal, and the intensity modulator 405 is configured to flatten it. The number of sidebands of the multi-carrier optical signal generated by the phase modulator 404 is associated with the modulation factor (a ratio of the input radio frequency driving voltage to the half-wave voltage) of the phase modulator. Therefore, on the one hand, the amplitude of the input radio frequency signal may be adjusted, and on the other hand, the modulation factor of the phase modulator may be increased by using the two phase modulators in cascade, so as to generate a sufficient number of orthogonal optical subcarriers. The DC signal source 403 is mainly configured to provide the DC offset for the intensity modulator 405. It is possible to flatten the generated optical subcarriers by adjusting the DC offset of the DC signal source 403 and a radio frequency modulation factor of the intensity modulator 405.

Fig. 5 is a block diagram illustrating a module for transmitting ultra-dense PDM-QPSK optical signal according to an embodiment of the present disclosure. As shown in Fig. 5, the module 42 for transmitting ultra-dense PDM-QPSK optical signal mainly includes an interleaver (IL) 421, a first polarization controller (PC) 422, a second polarization controller 423, a first electrical dual channel waveform generator 424, a second electrical dual channel waveform generator 430, a first IQ modulator 425, a second IQ modulator 426, a first polarization multiplexer (PoL-MUX) 427, a second polarization multiplexer 428 and a wavelength selection switch (WSS) 429.

In an embodiment, the interleaver 421 is configured to divide the multi-carrier optical signal outputted by the orthogonal multi-carrier light source into an odd-numbered optical signal and an even-numbered optical signal, input the odd-numbered optical signal into the first polarization controller 422, and input the even-numbered optical signal into the second polarization controller 423. The first polarization controller 422 is configured to perform polarization control on the input odd-numbered optical signal and output the polarized odd-numbered optical signal to the first IQ modulator 425. The second polarization controller 423 is configured to perform polarization control on the input even-numbered optical signal and output the polarized even-numbered optical signal to the second IQ modulator 426. The first IQ modulator 425 is configured to modulate the input polarized odd-numbered optical signal using an external modulation to generate a first QPSK signal. The second IQ modulator 426 is configured to modulate the input polarized even-numbered optical signal using an external modulation to generate a second QPSK signal. The first electrical dual channel waveform generator 424 is configured to generate an electrical signal for driving the first IQ modulator 425. The second electrical dual channel waveform generator 430 is configured to generate an electrical signal for driving the second IQ modulator 426. The first polarization multiplexer 427 is configured to process the first QPSK signal to generate a first PDM-QPSK signal. The second polarization multiplexer 428 is configured to process the second QPSK signal to generate a second PDM-QPSK signal. The wavelength selection switch 429 is configured to optically filter the first PDM-QPSK signal and the second PDM-QPSK signal, respectively, to generate an ultra-dense PDM-QPSK optical signal which is spectrally formed by orthogonal binary.

In an alternative implementation embodiment of the present disclosure, the orthogonal multi-carrier light source is a comb spectrum light source. The comb spectrum light source is divided into upper and lower paths which are odd-numbered and even-numbered through the 1:1 interleaver, the light of the odd-numbered path (1, 3, ... 9, 11) and the even-numbered path (2, 4, ..., 10) pass through the polarization controller, and polarized lights of the odd-numbered path and the even-numbered path are output. The QPSK signals are independently generated from the polarized lights of the odd-numbered path and the even-numbered path using an external modulation through one of the IQ modulators. The two electrical signals for driving the upper and lower IQ modulators are each generated by one of the electrical dual channel waveform generators. Then, the PDM-QPSK signals are generated by the two QPSK signals of the upper odd-numbered path and the lower even-numbered path through one of the polarization multiplexers, respectively. Finally, the WSS having two inputs is used to perform optical filtering on the odd-numbered and even-numbered channels, respectively, to generate an ultra-dense PDM-QPSK signal, which is spectrally formed by orthogonal binary (QDB). Since the interval between the odd-numbered and even-numbered channels is sufficiently wide, there is substantially no crosstalk between the channels, and thus the odd-numbered and even-numbered channels can be regarded as independent channels. This filtering is effectively equivalent to the effect of respective filtering on each channel.

The ultra-dense PDM-QPSK optical signal output by the module 42 for transmitting an ultra-dense PDM-QPSK optical signal is transmitted to the module for detecting and demodulating the optical signal through the optical fiber 3, wherein the optical fiber may be composed by a standard single mode optical fiber-28 (SMF-28).

As described above, the embodiment of the present disclosure provides a module for detecting and demodulating signal based on polarization diversity and maximal ratio combining algorithm, and applies the module for detecting and demodulating signal to an ONU side of an ultra-dense WDM-PON system. The module for detecting and demodulating signal not only improves the bit error rate performance of the signal received from single channel through the polarization diversity technique and the maximal ratio combining algorithm, but also overcomes the shortcomings of the complex structure of the system which uses the common space, frequency and time diversity technology, thereby simplifying the structure of the ONU side of the system and achieving cost control. Further, the module for detecting and demodulating signal of the present embodiment also has the characteristics of being applicable to any modulation mode and arbitrary branch fading distribution, and thus has broad application prospects in the actual system.

The embodiment of the present disclosure also provides an ultra-dense WDM-PON system including the module for detecting and demodulating signal based on polarization diversity and maximal ratio combining algorithm, the transmitting side of the system generates an orthogonal multi-carrier by using an orthogonal multi-carrier light source which is based on the cascaded phase modulator and the intensity modulator, and the receiving side realizes data recovery by using the module for detecting and demodulating signal based on polarization diversity and maximal ratio combining algorithm.

The technical solutions provided by the embodiments of the present disclosure will be described below with reference to specific embodiments.

First embodiment

This embodiment is an implementation of the frequency-locked and power-flattened orthogonal multi-carrier light source shown in Fig. 4. As shown in Fig. 4, the orthogonal multi-carrier light source may include an external cavity laser, a sine radio frequency signal source, a phase modulator, a power amplifier, a phase shifter, an intensity modulator and a DC signal source.

In the present embodiment, firstly, the sine radio frequency signal source generates radio frequency signals in which one radio frequency signal drives the first phase modulator by passing through one of the power amplifiers, and the other two radio frequency signals sequentially drive the second phase modulator and the intensity modulator by passing through one of the phase shifters and one of the power amplifiers. Preferably, the intensity modulator may be Mach-Zehnder modulator (MZM). The phase shifter is mainly configured to adjust the phase mismatch of the radio frequency signals input from different paths. The power amplifier serves to adjust the amplitude of the radio frequency driving voltage for driving the phase modulator and the intensity modulator.

Then, the optical signal output by the external cavity laser is input into the first phase modulator for an optical modulation, and the output of the first phase modulator is shown in equation (1), wherein $V_\pi$ is half-wave voltage of the phase modulator, $V_{rf}$ is a radio frequency driving voltage, $R1 = V_{rf}/V_\pi$ denotes a modulation factor, $E_{in}$ is an incident electric field intensity, $E_{out}$ is an output electric field intensity, and $f_s$ is a frequency of a sine radio frequency signal.

$$E_{out} = E_{in}(t) \exp\left( j\pi \frac{V_{rf}}{V_\pi} \right) = E_{im}(t) \exp\left( j\pi R_1 \sin(2\pi f_s t) \right)$$

$$(1)$$

Then, the output of the first phase modulator is input as an input signal into the second phase modulator, and the cascaded two phase modulators are formed. The output of the second phase modulator is shown in equation (2),

$$
\begin{aligned}
E_{\text{out}}(t) &= E_{\text{in}}(t) \exp\left(\pi R_1 \sin\left(2\pi f_s t\right)\right) \exp\left(2\pi R_2 \sin\left(2\pi f_s t\right)\right) \\
&= E_{\text{in}}(t) \exp\left(\pi\left(R_1 + R_2\right) \sin\left(2\pi f_s t\right)\right) \\
&= E_{\text{in}}(t) \exp\left(\pi R_N \sin\left(2\pi f_s t\right)\right)
\end{aligned}
\tag{2}
$$

wherein, $R_N = R_1 + R_2$, such that the effect of the cascaded two phase modulator can be considered as a single phase modulator, while the phase modulation coefficient is increased, and the problem of an input amplitude of a single radio frequency being not large enough is solved. Further, as shown above, the modulation factor R1 or R2 is proportional to the radio frequency driving voltage $V_{\text{rf}}$. Preferably, the amplitude of the radio frequency driving voltage for driving the two cascaded phase modulators is adjusted by the power amplifier to generate more optical sidebands. The frequency interval between the sidebands of the multi-carrier light source coincides with the signal frequency of the orthogonal radio frequency signal source.

Finally, the output of the second phase modulator of the two cascaded phase modulator is then input into the intensity modulator to achieve the flattening process for the generated optical subcarrier. The intensity modulator provides the DC offset by using the direct current signal source. Preferably, a flattened optical subcarrier is generated by adjusting the DC offset and the radio frequency modulation factor of the intensity modulator.

Second embodiment

This embodiment is an implementation of the module for transmitting ultra-dense PDM-QPSK optical signal shown in Fig. 5. As shown in Fig. 5, the module for transmitting ultra-dense PDM-QPSK optical signal mainly includes an orthogonal multi-carrier light source, an interleaver, a polarization controller, an electrical dual channel waveform generator, an IQ modulator, a polarization multiplexer and a wavelength selection switch.

Firstly, the input orthogonal multi-carrier is divided into odd and even parts by the interleaver, and the frequency interval between the odd-numbered or even-numbered wavelengths will thereby be increased to twice the frequency of the radio frequency driving signal.

Then, the odd or even-numbered wavelengths are input into one of the polarization controllers, and the polarized odd-numbered or even-numbered wavelengths are output.

Thereafter, the QPSK signals are independently generated by the polarized lights of the odd-numbered path and the even-numbered path using an external modulation through one of the IQ modulators. The two electrical signals for driving the two upper and lower IQ modulators are generated by the two electrical dual channel waveform generators.

Subsequently, the PDM-QPSK signals are each generated by the two QPSK signals of the upper odd-numbered path and the lower even-numbered path through one of the polarization multiplexers, respectively.

Finally, the WSS having two inputs is configured to perform optical filtering on the odd-numbered and even-numbered channels, respectively, to generate an ultra-dense PDM-QPSK signal, which is spectrally formed by orthogonal binary (QDB). Since the interval between the odd-numbered and even-numbered channels is sufficiently wide, there is substantially no crosstalk between the channels, and thus the odd-numbered and even-numbered channels can be regarded as independent channels. This filtering is effectively equivalent to the effect of respective filtering on each channel.

Third embodiment

This embodiment is an implementation of the module for detecting and demodulating signal shown in Fig. 2, which is based on polarization diversity and maximal ratio combining algorithm. As shown in Fig. 2, the module for detecting and demodulating signal mainly includes a tunable optical filter, a polarization beam splitter, an optoelectronic detector, a maximal ratio combining module and a demodulation module.

Firstly, an ultra-dense PDM-QPSK optical signal is input into the module for detecting and demodulating signal, which is based on polarization diversity and maximal ratio combining algorithm, as the received optical signal through the standard single mode optical fiber-28.

Then, the tunable optical filter filters a certain channel among multiple channels of the ultra-dense WDM-PON to obtain the received optical signal of the channel.

Thereafter, the polarization beam splitter performs polarization diversity on the received optical signal to split the optical signal of the single channel into X polarized signal and Y polarized signal

Subsequently, the two optical signals in different polarization directions are each input into one of the optoelectronic detectors, such that the optical signals are converted into electrical signals.

Then, the maximal ratio combining module assigns weights for the two electrical signals, to obtain and output a weighted combination of the received optical signals to obtain a diversity gain. Thus the bit error rate performance of the received signal is further improved on the basis of single reception. The weight assignment process is mainly achieved by performing channel estimation on two independent received signals and then assigning a high weight to a branch having a high signal-to-noise ratio and assigning a low weight to a branch having a low signal-to-noise ratio based on the signal-to-noise ratio. The channel estimation for determining the signal-to-noise ratio of the received signal may be obtained by using on-off keying (OOK) at the transmitting side, sending a training sequence and calculating the ratio of the effective signal to the noise at the receiving side.

Finally, the demodulation module demodulates the weighted combined output signal based on the modulation format used by the transmitting side of the system, and outputs the demodulated received signal.

Fourth embodiment

This embodiment is an implementation of the ultra-dense WDM-PON system including the module for detecting and demodulating signal which is based on polarization diversity and maximal ratio combining algorithm shown in Fig. 1. The ultra-dense WDM-PON includes an orthogonal multi-carrier light source, a module for transmitting ultra-dense PDM-QPSK optical signal, an optical fiber link, and a module for detecting and demodulating signal which is based on polarization diversity and maximal ratio combining algorithm, which are sequentially connected in a direction of a downlink signal.

The orthogonal multi-carrier light source, the module for transmitting ultra-dense PDM-QPSK optical signal and the module for detecting and demodulating signal which is based on polarization diversity and maximal ratio combining algorithm in the present embodiment may use the implementations of the first, second and third embodiments, and related technical details can be found in the embodiments described as above, which will not repeated here. It should be noted that the ultra-dense WDM-PON system can be exactly the same as that of an ordinary WDM-PON system in a direction of an uplink signal, the ONU side will use the amplitude modulation to generate an optical signal for the uplink transmission, and the OLT side will realize the detection and demodulation of the uplink signal by a direct detection.

It will be understood by those of ordinary skill in the art that the embodiments described above, except the maximal ratio combining module in the third embodiment, may be implemented not only by using corresponding experimental equipment, but also in the form of a software function module.

From the above description, it can be seen that the present disclosure achieves the following technical effects. The embodiment of the present disclosure provides a new module for detecting and demodulating signal based on polarization diversity and maximal ratio combining algorithm, and applies the module for detecting and demodulating signal to an ONU side of an ultra-dense WDM-PON system. The new module for detecting and demodulating signal not only improves the bit error rate performance of the signal received from single channel through the polarization diversity technique and the maximal ratio combining algorithm, but also overcomes the shortcoming of the complex structure of the system which uses the common space, frequency and time diversity technology, thereby simplifying the structure of the ONU side of the system and achieving cost control. Further, the module for detecting and demodulating signal proposed by the present disclosure also has the characteristics of being applicable to any modulation mode and arbitrary branch fading distribution, and thus has broad application prospects in the actual system.

It will be apparent to those skilled in the art that the various modules or steps of the present disclosure described as above may be implemented using general purpose computing devices, and may be centralized on a single computing device or distributed over a network composed by a plurality of computing devices. Optionally, the various modules or steps may be implemented with program code executable by the computing device, so that they may be stored in a storage device to be executed by the computing device. In some cases, the steps as shown or described may be executed in an order different from that shown described here, or may be made separately into individual integrated circuit modules, or may be implemented by making a plurality of modules or steps into a single integrated circuit module. Thus, the present disclosure is not limited to any particular combination of hardware and software.

The foregoing are only preferred embodiments of the disclosure and are not intended to be limiting of the disclosure, and those skilled in the art will understand that various changes and modifications may be made therein. Any modifications, equivalent substitutions, improvements and the like within the spirit and principles of the present disclosure are intended to be included within the scope of the present disclosure.

**INDUSTRIAL APPLICABILITY**

According to the technical solutions provided by the disclosure, by using the polarization diversity technique and the maximum combining ratio algorithm, the bit error rate performance of the received signal of a single channel is improved, and the shortcoming of the complex structure of a system which uses the common space, frequency and time diversity technology is overcome, such that the structure of the ONU side of the system is simplified and cost control is achieved.

**Claims**

1. A device for detecting and demodulating optical signal, comprising a tunable optical filter, a polarization beam splitter, a first optoelectronic detector, a second optoelectronic detector, a maximal ratio combining module and a demodulation module, wherein,

the tunable optical filter is configured to filter a signal of a channel among multiple channels of wavelength division multiplexing-passive optical network WDM-PON to obtain a received optical signal of the channel;
the polarization beam splitter is configured to perform polarization diversity on the received optical signal, split the received optical signal of the channel into X polarized optical signal and Y polarized optical signal, and input the X polarized optical signal and the Y polarized optical signal into the first optoelectronic detector and the second optoelectronic detector, respectively;
the first optoelectronic detector is configured to convert the input optical signal into a first electrical signal;
the second optoelectronic detector is configured to convert the input optical signal into a second electrical signal;
the maximal ratio combining module is configured to assign weights for the first electrical signals and the second electrical signals to obtain a weighted combined output signal of the received optical signal; and
the demodulation module is configured to demodulate the weighted combined output signal in accordance with a modulation format predefined by a transmitting side of a system to output a demodulated signal.

2. The device of claim 1, wherein the polarization beam splitter is configured to perform the polarization diversity on the received optical signal by splitting the received optical signal into two mutually independent duplicates through polarization diversity technique, one duplicate being the X polarized optical signal and the other being the Y polarized optical signal.

3. The device of claim 1, wherein the maximal ratio combining module comprises:

an estimation module configured to perform channel estimation on the first electrical signal and the second electrical signal, respectively, to obtain a signal-to-noise ratio of the first electrical signal and a signal-to-noise ratio of the second electrical signal;
a determination module configured to determine a weight assigned to the first electrical signal and a weight assigned to the second electrical signal in accordance with the signal-to-noise ratio of the first electrical signal and the signal-to-noise ratio of the second electrical signal, wherein, the higher the signal-to-noise ratio, the greater the weight assigned; and
a summing module configured to perform weighted summing on the first electrical signal and the second electrical signal in accordance with the weight of the first electrical signal and the weight of the second electrical signal to obtain the weighted combined output signal.

4. An apparatus for receiving optical signal, comprising the device for detecting and demodulating optical signal of any one of claims 1 to 3.

5. An ultra-dense WDM-PON system, comprising the apparatus for receiving optical signal of claim 4, and an apparatus for transmitting optical signal connected with the apparatus for receiving optical signal through an optical fiber.

6. The system of claim 5, wherein the apparatus for transmitting optical signal comprises an orthogonal multi-carrier light source and a module for transmitting ultra-dense polarization division multiplexed-quadrature phase shift keying PDM-QPSK optical signal connected with the orthogonal multi-carrier light source.

7. The system of claim 6, wherein the orthogonal multi-carrier light source comprises an external cavity laser, a radio frequency signal source, a direct current DC signal source, two cascaded phase modulators and an intensity modulator;

the external cavity laser is configured to provide an optical carrier signal for the first phase modulator of the two cascaded phase modulators;
the radio frequency signal source is configured to drive the two cascaded phase modulators and the intensity modulator, and generate a multi-carrier optical signal being flat and having a frequency interval in consistent with the frequency interval of the radio frequency signal;

the cascaded phase modulators are configured to generate a multi-carrier optical signal under the drive of the radio frequency signal source;

the intensity modulator is configured to flatten the multi-carrier optical signal generated by the phase modulator; and

the DC signal source is configured to provide a DC offset for the intensity modulator.

**8.** The system of claim 7, wherein the intensity modulator is configured to flatten the multi-carrier optical signal generated by the phase modulator by adjusting the DC offset and a radio frequency modulation factor of the intensity modulator.

**9.** The system of claim 6, wherein the module for transmitting the ultra-dense PDM-QPSK optical signal comprises an interleaver, a first polarization controller, a second polarization controller, a first electrical dual channel waveform generator, a second electrical dual channel waveform generator, a first in-phase quadrature (IQ) modulator, a second IQ modulator, a first polarization multiplexer, a second polarization multiplexer and a wavelength selection switch, wherein,

the interleaver is configured to divide the multi-carrier optical signal outputted by the orthogonal multi-carrier light source into an odd-numbered optical signal and an even-numbered light signal, input the odd-numbered optical signal into the first polarization controller, and input the even-numbered optical signal into the second polarization controller;

the first polarization controller is configured to perform polarization control on the input odd-numbered optical signal and output the polarized odd-numbered optical signal to the first IQ modulator;

the second polarization controller is configured to perform polarization control on the input even-numbered optical signal and output the polarized even-numbered optical signal to the second IQ modulator;

the first IQ modulator is configured to modulate the input polarized odd-numbered optical signal using an external modulation to generate a first QPSK signal;

the second IQ modulator is configured to modulate the input polarized even-numbered optical signal using an external modulation to generate a second QPSK signal;

the first electrical dual channel waveform generator is configured to generate an electrical signal for driving the first IQ modulator;

the second electrical dual channel waveform generator is configured to generate an electrical signal for driving the second IQ modulator;

the first polarization multiplexer is configured to process the first QPSK signal to generate a first PDM-QPSK signal;

the second polarization multiplexer is configured to process the second QPSK signal to generate a second PDM-QPSK signal; and

the wavelength selection switch is configured to optically filter the first PDM-QPSK signal and the second PDM-QPSK signal, respectively, to generate an ultra-dense PDM-QPSK optical signal being spectrally formed by orthogonal binary.

Orthogonal
Multi-Carrier
Light Source
40

Ultra-Dense PDM-
QPSK Optical Signal
Transmitting Module
42

SMF

Optical Signal Transmitting Device 4

λj

Optical Signal Detection
and Demodulation Device
20

λi

Coupler

Optical Signal Receiving Device 2

λj

AM

Uplink Signals

**Fig. 1**

**Fig. 2**

**Fig. 3**

**Fig. 4**

**Fig. 5**

# INTERNATIONAL SEARCH REPORT

| International application No. |
|---|
| PCT/CN2014/092186 |

## A. CLASSIFICATION OF SUBJECT MATTER

H04B 10/60 (2013.01) i

According to International Patent Classification (IPC) or to both national classification and IPC

## B. FIELDS SEARCHED

Minimum documentation searched (classification system followed by classification symbols)

H04B 10/

Documentation searched other than minimum documentation to the extent that such documents are included in the fields searched

Electronic data base consulted during the international search (name of data base and, where practicable, search terms used)

CNTXT, CNKI, VEN: optical, receiv+, detect+, demodulat+, polariz+, PBS, combin+, value, transmi+, multi+, carrier, source, QPSK, super, dense, WDM, PON

## C. DOCUMENTS CONSIDERED TO BE RELEVANT

| Category* | Citation of document, with indication, where appropriate, of the relevant passages | Relevant to claim No. |
|---|---|---|
| Y | CN 102412890 A (NEC CORP.) 11 April 2012 (11.04.2012) description, paragraphs [0018]-[0033] | 1-9 |
| Y | CN 103475402 A (UNIV BEIJING POSTS & TELECOM) 25 December 2013 (25.12.2013) description, paragraphs [0058]-[0075] | 1-9 |
| Y | CN 102932089 A (UNIV SOUTH CHINA NORMAL) 13 February 2013 (13.02.2013) description, paragraphs [0055]-[0066], figure 2 | 5-9 |
| A | CN 102461035 A (NOKIA SIEMENS NETWORKS GMBH) 16 May 2012 (16.05.2012) the whole document | 1-9 |

☐ Further documents are listed in the continuation of Box C.   ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 06 March 2015 | 13 March 2015 |

| Name and mailing address of the ISA State Intellectual Property Office of the P. R. China No. 6, Xitucheng Road, Jimenqiao Haidian District, Beijing 100088, China Facsimile No. (86-10) 62019451 | Authorized officer ZHENG, Chunyu Telephone No. (86-10) 62411300 |
|---|---|

Form PCT/ISA /210 (second sheet) (July 2009)

INTERNATIONAL SEARCH REPORT
Information on patent family members

| International application No. |
| --- |
| PCT/CN2014/092186 |

| Patent Documents referred in the Report | Publication Date | Patent Family | Publication Date |
| --- | --- | --- | --- |
| CN 102412890 A | 11 April 2012 | US 2012069854 A1 | 22 March 2012 |
| | | JP 2012070051 A | 05 April 2012 |
| CN 103475402 A | 25 December 2013 | None | |
| CN 102932089 A | 13 February 2013 | CN 102932089 B | 14 January 2015 |
| CN 102461035 A | 16 May 2012 | EP 2436132 A1 | 04 April 2012 |
| | | US 2012084619 A1 | 05 April 2012 |
| | | US 8707138 B2 | 22 April 2014 |
| | | WO 2010136068 A1 | 02 December 2010 |
| | | EP 2436132 B1 | 10 July 2013 |

Form PCT/ISA /210 (patent family annex) (July 2009)